# EUROPEAN PATENT APPLICATION

(11) **EP 2 648 467 A1**
(43) Date of publication of application: **09.10.2013**
(21) Application number: 11853978.2
(22) Date of filing: 29.12.2011
(51) Int. Cl.: H04W 68/00, H04W 40/16, H04W 40/00

(54) **METHOD FOR UPDATING SYSTEM MESSAGES, COMMUNICATION SYSTEM AND ENODE B**

(30) Priority: 29.12.2010 CN 201010624689
(71) Applicant: Huawei Technologies Co., Ltd., Shenzhen, Guangdong 518129 (CN)
(72) Inventor: LI, Yajuan, Shenzhen Guangdong 518129 (CN); SHI, Jie, Shenzhen Guangdong 518129 (CN); CHANG, Junren, Shenzhen Guangdong 518129 (CN)
(74) Representative: Pfenning, Meinig & Partner GbR
(86) International application number: PCT/CN2011/084913
(87) International publication number: WO 2012/089143

(57) **Abstract**

The present invention provides a method for updating a system message, where an eNB performs a communication resource negotiation with a neighboring eNB to obtain an available subframe, sends a paging message including a system message update indication to a UE, and sends a system message update indication message to the UE in the available subframe. The present invention further provides a communication system and an eNB. By using the method for updating a system message, the communication system, and the eNB according to the present invention, a message is transmitted in a low-interference available subframe, thereby reducing adverse effects caused by interference and improving accuracy of system message update.

## Description

This application claims priority to Chinese Patent Application No. 201010624689.7, filed with the Chinese Patent Office on December 29, 2010, and entitled "METHOD FOR UPDATING SYSTEM MESSAGE, COMMUNICATION SYSTEM, AND BASE STATION", which is incorporated herein by reference in its entirety.

### TECHNICAL FIELD

Embodiments of the present invention relate to communications technologies, and in particular, to a method for updating a system message, a communication system, and a base station (eNode B, referred to as eNB for short).

### BACKGROUND

Currently, in a long term evolution (Long Term Evolution, referred to as LTE for short) system, when it is required to update a system message, an eNB sends a paging (Paging) message to a user equipment (User Equipment, referred to as UE for short), to notify, through the message, the UE that a system message is changed; and after receiving the paging message, the UE obtains a changed system message from the eNB.

In a heterogeneous network, the UE is in overlapped coverage of a macro base station (Macro eNB) and a small eNB. If the macro base station and the small eNB adopt the same frequency deployment, downlink signals are sent on carriers of a same frequency, and during communication with the UE, the two eNBs interfere with each other. An eNB affected by interference is referred to as an infringed eNB, and an eNB interfering with another eNB is referred to as an infringing eNB. When a UE affected by interference needs to perform system message update with the infringed eNB, the UE affected by interference is affected by the infringing eNB. In an existing method for updating a system message, after receiving a paging message, the UE obtains a changed system message from the eNB. Therefore, in the heterogeneous network, when being affected by strong interference, the UE cannot receive the system message correctly, and accuracy of message update is low. Furthermore, because the UE cannot accurately update a system message, the UE continuously repeats an operation of receiving a system message, until all system messages are received successfully or power of the UE is exhausted, so that a large amount of communication system resources are occupied, communication efficiency is lowered, and power consumption of the UE is increased.

### SUMMARY

Embodiments of the present invention provide a method for updating a system message, a communication system, and a base station, so as to improve accuracy of system message update. An embodiment of the present invention provides a method for updating a system message, where the method includes:
performing, by an eNB, a communication resource negotiation with a neighboring eNB to obtain an available subframe;
sending, by the eNB, a paging message including a system message update indication to a user equipment UE; and
sending, by the eNB, a system message update indication message to the UE in the available subframe.

An embodiment of the present invention further provides a communication system, including:
more than one base station eNB, where each eNB is configured to perform a communication resource negotiation with a neighboring eNB to obtain an available subframe, send a paging message including a system message update indication to a user equipment UE, and send a system message update indication message to the UE in the available subframe; and
a UE, configured to receive the paging message including the system message update indication, and receive the system message update indication message in the available subframe. The present invention further provides an eNB, including:
a negotiating module, configured to perform a communication resource negotiation with a neighboring eNB to obtain an available subframe; and
a sending module, configured to send a paging message including a system message update indication to a user equipment UE, and send a system message update indication message to the UE in the available subframe.

It can be known from the foregoing technical solutions that, in the embodiments of the present invention, the eNB first negotiates with the neighboring eNB to obtain the available subframe, and sends the system update indication message to the UE in the available subframe; because the available subframe is a low-interference subframe, adverse effects caused by interference may be reduced by transmitting the message in the available subframe, so that the UE can correctly obtain an updated system message, thereby improving the accuracy of system message update.

### BRIEF DESCRIPTION OF DRAWINGS

To describe the technical solutions in the embodiments of the present invention or in the prior art more clearly, the following briefly introduces accompanying drawings required for describing the embodiments or the prior art. Apparently, the accompanying drawings in the following description show merely some embodiments of the present invention, and persons of ordinary skill in the art may further obtain other drawings according to these accompanying drawings without creative efforts.
FIG. 1a is a flowchart of a method for updating a system message according to a first embodiment of the present invention;
FIG. 1b is a schematic diagram of a comparison between a subframe of an infringing station and a subframe of an infringed station according to an embodiment of the present invention;
FIG. 2 is a signaling flowchart of a method for updating a system message according to a second embodiment of the present invention;
FIG. 3 is a signaling flowchart of a method for updating a system message according to a third embodiment of the present invention;
FIG. 4 is a signaling flowchart of a method for updating a system message according to a fourth embodiment of the present invention;
FIG. 5 is a signaling flowchart of a method for updating a system message according to a fifth embodiment of the present invention;
FIG. 6 is a schematic structural diagram of a communication system according to a sixth embodiment of the present invention; and
FIG. 7 is a schematic structural diagram of an eNB according to a seventh embodiment of the present invention.

### DESCRIPTION OF EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the embodiments to be described are merely a part rather than all of the embodiments of the present invention. All other embodiments obtained by persons of ordinary skill in the art based on the embodiments of the present invention without creative efforts shall fall within the protection scope of the present invention.

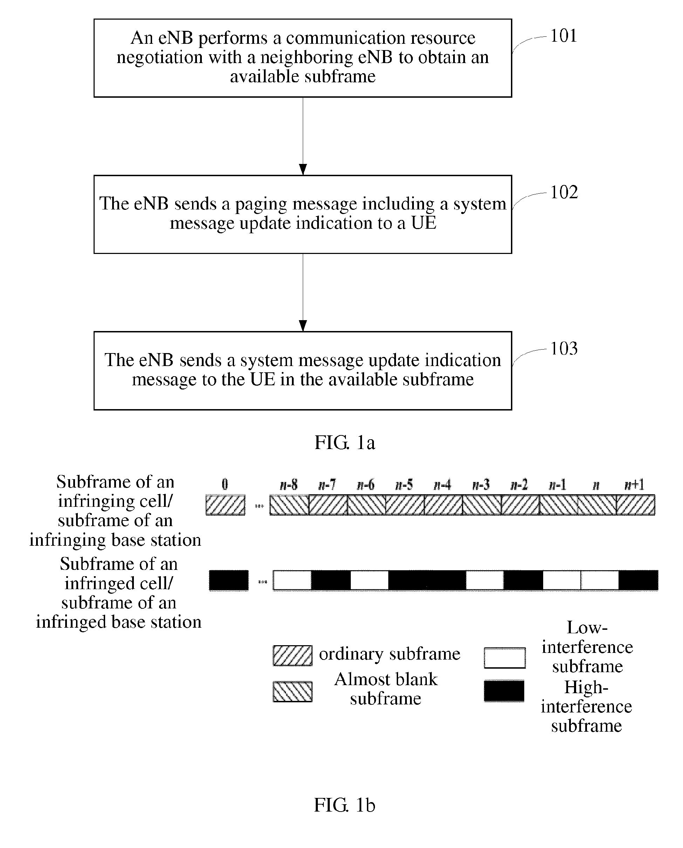

FIG. 1a is a flowchart of a method for updating a system message according to a first embodiment of the present invention. As shown in FIG. 1a, the method includes the following procedure.

Step 101: An eNB performs a communication resource negotiation with a neighboring eNB to obtain an available subframe. In this step, the available subframe is a low-interference subframe when the eNB communicates with a UE. Interference occurring when the eNB communicates with the UE by using the low-interference subframe is lower than interference occurring when the eNB communicates with the UE by using an ordinary subframe.

Step 102: The eNB sends a paging message including a system message update indication to the UE.

Step 103: The eNB sends a system message update indication message to the UE in the available subframe.

In the first embodiment of the present invention, the eNB first negotiates with the neighboring eNB to obtain the available subframe, and sends the system update indication message to the UE in the available subframe; because the available subframe is a low-interference subframe, adverse effects caused by interference may be reduced by transmitting the message in the available subframe, so that the UE can correctly obtain an updated system message, thereby improving accuracy of system message update.

For convenience of understanding, FIG. 1b shows a schematic diagram of a comparison between a subframe of an infringing station (also referred to as a subframe of an infringing cell) and a subframe of an infringed station (also referred to as a subframe of an infringed cell) where the UE is located. In this embodiment, that a macro base station is an infringing base station and a small base station pertaining to the macro base station is an infringed eNB is taken as an example for description, but the example is not intended to limit the present invention. Referring to FIG. 1b, it can be seen that subframes of the infringing cell include an almost blank subframe (Almost Blank Subframe, referred to as ABS for short) and an ordinary subframe. Subframes of the infringing base station, the small base station, and a UE pertaining to the small base station are synchronous. A protected subframe (or a low-interference subframe and the like, a specific name of which is not limited in this embodiment) of the UE is at a same time point as the ABS subframe of the infringing cell, and is indicated by a white blank space in FIG. 1b. A subframe of the infringing cell, where the subframe of the infringing cell sends and receives data, is an ordinary subframe; and an ordinary subframe of the infringed station is at a same time point as the ordinary subframe of the infringing cell, is also referred to as a high-interference subframe of the infringed station, and is indicated by a black blank space in FIG. 1b.

Certainly, the foregoing example is merely provided for easy understanding. For a UE, differences of interference conditions of different subframes of the UE may be caused by multiple reasons, but in a common case, the differences are caused by another node other than a UE serving node, that is, a non-UE serving node, for example, the macro base station described above, or another station whose frequency domain is overlapped with that of a UE serving base station, which is not limited in this embodiment. However, interference caused by an interference source of the UE at some time points is small, and a protected subframe is formed, that is, the low-interference subframe is formed. In addition to the ABS subframe of the macro base station, a UE subframe corresponding to a multicast/broadcast single frequency network (Multicast/Broadcast Single Frequency Network, referred to as MBSFN for short) subframe of the macro base station may also be regarded as a low-interference subframe, because the MBSFN subframe of the macro base station has no interference in a UE pertaining to a neighboring small base station. This embodiment is not intended to limit causes of formation of a lower-interference subframe; as long as interference of a non-UE serving node in the UE or a station that the UE accesses in a specific subframe is lower than interference of the non-UE serving node in an ordinary subframe, the specific subframe may be used as a lower-interference subframe of the UE or the station that the UE accesses.

Specifically, in the foregoing step 103, an operation of sending a paging message including a system message update indication to the UE may be implemented in the following two specific manners, namely, a implementation manner of sending a dedicated message to the UE and a implementation manner of sending a broadcast message to the UE. The implementation manner of sending the dedicated message to the UE is described in the following through a second embodiment of the present invention to a fourth embodiment of the present invention; and the implementation manner of sending the broadcast message to the UE is described in the following through a fifth embodiment of the present invention.

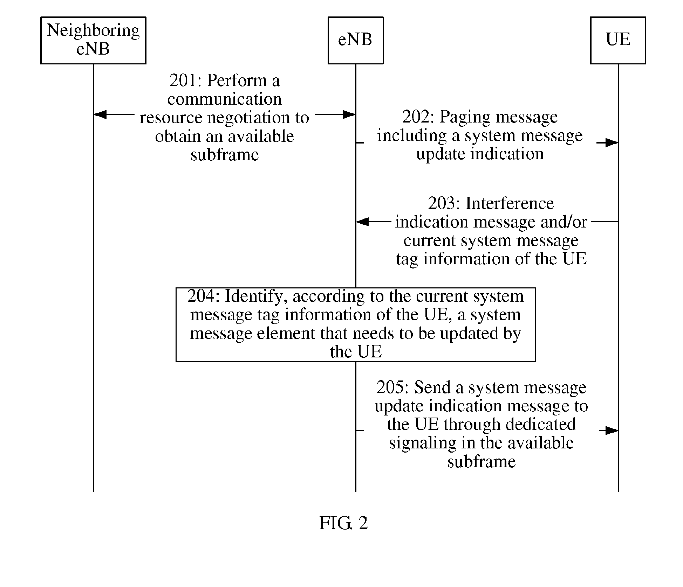

FIG. 2 is a signaling flowchart of a method for updating a system message according to a second embodiment of the present invention. As shown in FIG. 2, the method includes the following procedure.

Step 201: An eNB performs a communication resource negotiation with a neighboring eNB to obtain an available subframe. In this step, the available subframe is a low-interference subframe when the eNB communicates with a UE, for example, an ABS subframe. An implementation manner for the eNB to perform the communication resource negotiation with the neighboring eNB is: An infringed cell of an infringed eNB sends, through an X2 interface between the eNB and the neighboring eNB, a message indicating that the infringed cell is affected to an infringing cell of an infringing eNB; and the infringing cell of the infringing eNB sends, according to the interference indication message, mode information of an ABS subframe of the infringing cell to the infringed cell of the infringed eNB.

Step 202: The eNB sends a paging message including a system message update indication to the UE.

In this step, when a system message is changed, the eNB sends the paging message including the system message update indication to the UE to instruct the UE to start system message update.

Step 203: The eNB receives an interference indication message and/or current system message tag information (systemInfoValueTag) of the UE from the UE.

In this step, a specific manner for the UE to send an interference indication message and/or current system message tag information of the UE to the eNB is: The UE sends a medium access control (Medium Access Control, referred to as MAC for short) control element (Control Element, referred to as CE for short) to the eNB, where the MAC CE includes the interference indication message and/or the current system message tag information of the UE. Accordingly, the eNB receives the MAC CE from the UE, where the MAC CE includes the interference indication message and/or the current system message tag information of the UE.

In step 203, if the eNB merely receives the interference indication message from the UE, perform step 205 directly after step 203. In step 203, if the eNB receives the current system message tag information of the UE from the UE, after step 203, perform step 205 directly; or perform step 204 first, and perform step 205 after step 204.

Step 204: The eNB identifies, according to the current system message tag information of the UE, a system message element that needs to be updated by the UE.

In this step, the eNB stores the current system message tag information of the UE received each time, and when receiving the current system message tag information of the UE next time, compares the received current system message tag information of the UE with the currently stored current system message tag information of the UE, so as to obtain the system message element that needs to be updated by the UE. By using this method, a version of the system message of the UE is identified through a system message tag. If a system message update process of the UE is not completed successfully for a time, when system message update is performed next time, the eNB can acquire, according to the system message tag of the UE, that the previous system message update of the UE is not successful. Therefore, it is required to perform system message update on a basis of a version of the system message before the previous system message update.

Step 205: The eNB sends a system message update indication message to the UE through dedicated signaling in the available subframe.

In this step, the system message update indication message is sent through the dedicated signaling, where the message is a dedicated message, and the message may specifically be expressed as SI_Update_Indication. Furthermore, content of the system message update indication message in step 204 may adopt any one of the following two manners. In a first manner, the system message update indication message includes all system message elements after update. In a second manner, the system message update indication message merely includes an updated system message element, namely, the system message update indication message does not include all system message elements and merely includes a changed system message compared with a system message before update, where the updated system message element is a system message element that needs to be updated by the UE and is identified according to the current system message tag information of the UE in step 204.

The method for updating a system message according to the second embodiment of the present invention is applicable to both a UE in an access state and a UE in an idle state. In the second embodiment of the present invention, the UE sends the interference indication message to the eNB through the MAC CE, the eNB acquires, through the interference indication message, that the UE is currently affected by interference and cannot correctly receive the system message, and then the eNB sends the system message update indication message to the UE in the low-interference available subframe obtained through the negotiation. Therefore, when the UE is affected by interference, the eNB can acquire, through the interference indication message, that the UE is affected by interference, and then initiate the step of sending the system message update indication message to the UE in the available subframe, thereby further ensuring that the UE can also correctly obtain an updated system message when the UE is affected by interference. Furthermore, the UE sends the current system message tag information of the UE to the eNB through the MAC CE, and the eNB identifies, according to the current system message tag information of the UE, the system message element that needs to be updated by the UE. Because the system message update indication message may merely include the updated system message element and may not include an unchanged system message element, capacity of the system message update indication message is reduced, thereby further ensuring that the message can be successfully transmitted to the UE, and further improving accuracy of system message update.

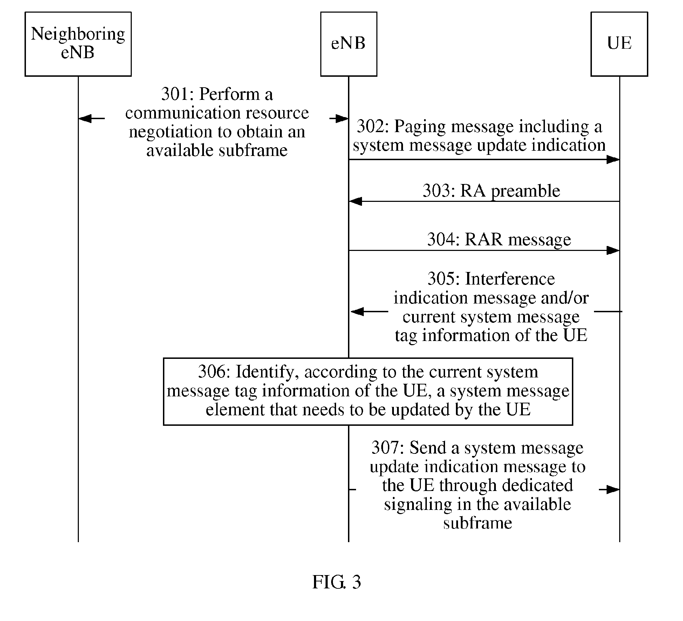

FIG. 3 is a signaling flowchart of a method for updating a system message according to a third embodiment of the present invention. As shown in FIG. 3, the method includes the following procedure.

Step 301: An eNB performs a communication resource negotiation with a neighboring eNB to obtain an available subframe. In this step, the available subframe is a low-interference subframe when the eNB communicates with a UE. This step is the same as step 201 in the second embodiment of the present invention, and details are not repeatedly described here.

Step 302: The eNB sends a paging message including a system message update indication to the UE.

Step 303: The eNB receives a random access (Random Access, referred to as RA for short) preamble (Preamble) from the UE.

Step 304: The eNB sends a random access response (Random Access Response, referred to as RAR for short) message to the UE.

In this step, after receiving the RA preamble from the UE, the eNB returns the RAR message to the UE as a response. Furthermore, an implementation manner of performing this step is: The eNB sends the RAR message to the UE in the available subframe obtained in step 301.

Step 305: The eNB receives an interference indication message and/or current system message tag information of the UE from the UE.

This step may be specifically implemented in the following two manners.

A first manner is applicable to a UE in an idle state. Specifically, the first manner is: The eNB receives a radio resource control (Radio Resource Control, referred to as RRC for short) connection request message from the UE, where the message includes an interference indication message and/or current system message tag information of the UE. The RRC connection request message may be expressed as an RRC _Connection_Request message, and the interference indication message is carried by the message. A specific method for indicating interference is: A new cause (Cause) value is added to the message, where the cause value is used to indicate that the UE is affected by interference currently and cannot correctly receive a system message.

A second manner is applicable to both a UE in an idle state and a UE in an access state. Specifically, the second manner is: The eNB receives a MAC CE from the UE, where the MAC CE includes an interference indication message and/or current system message tag information of the UE. The interference indication message is carried by the MAC CE, and indicates that the UE is currently affected by interference and cannot correctly receive an updated system message.

In step 305, if the eNB merely receives the interference indication message from the UE, perform step 307 directly after step 305. In step 305, if the eNB receives the current system message tag information of the UE from the UE, after step 305, perform step 307 directly; or perform step 306 first, and perform step 307 after step 306.

Step 306: The eNB identifies, according to the current system message tag information of the UE, a system message element that needs to be updated by the UE.

This step is the same as step 204 recorded in the second embodiment of the present invention, and details are not repeatedly described here.

Step 307: The eNB sends a system message update indication message to the UE through dedicated signaling in the available subframe.

This step is the same as step 205 recorded in the second embodiment of the present invention, and details are not repeatedly described here. Furthermore, in a situation that the UE receiving the system message update is in an access state, content of the system message update indication message in this step may adopt any one of the two manners in step 205 of the second embodiment. For a situation that the UE receiving the system message update is in an idle state, content of the system message update indication message may adopt not only the foregoing two manners, but also any one of a third manner and a fourth manner in the following. In the third manner, the system message update indication message merely includes all system message elements of a designated information block of the system message, and does not include another information block in the system message. In the fourth manner, the system message update indication message merely includes an updated system message element of the designated information block of the system message, does not include another information block in the system message, and also does not include an unchanged system message element in the designated information block. In the third manner and the fourth manner, in an implementation manner, the designated information block may be one or a combination of a master information block (Master Information Block, referred to as MIB for short), a system information block 1 (System Information Block 1, referred to as SIB1 for short), and a system information block 2 (System Information Block 2, referred to as SIB2 for short).

In the third embodiment of the present invention, the UE may send the interference indication message and/or the current system message tag information of the UE to the eNB through the MAC CE, and the UE in the idle state may also send the interference indication message and/or the current system message tag information of the UE to the eNB through the RRC connection request message. Therefore, for both the UE which has accessed the eNB or the UE which has not accessed the eNB, the eNB can acquire that the UE is currently affected by interference and cannot correctly receive the system message, and sends the system message update indication message to the UE in a low-interference available subframe obtained through the negotiation, thereby ensuring that the UE can also correctly obtain an updated system message when the UE is affected by interference. Furthermore, because the system message update indication message may merely include an updated system message element, capacity of the system message update indication message is reduced, thereby further ensuring that the message can be successfully transmitted to the UE, and further improving accuracy of system message update.

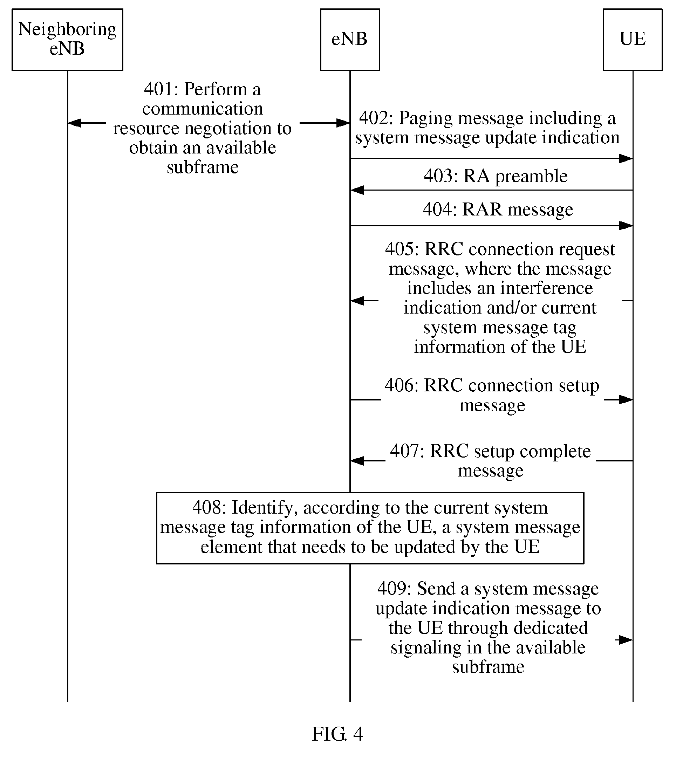

FIG. 4 is a signaling flowchart of a method for updating a system message according to a fourth embodiment of the present invention. As shown in FIG. 4, the method includes the following procedure.

Step 401: An eNB performs a communication resource negotiation with a neighboring eNB to obtain an available subframe.

Step 402: The eNB sends a paging message including a system message update indication to a UE. Step 403: The eNB receives an RA preamble from the UE.

Step 404: The eNB sends an RAR message to the UE.

Steps 401 to 404 are the same as steps 301 to 304 recorded in the third embodiment of the present invention respectively, and details are not repeatedly described here.

Step 405: The eNB receives an interference indication message and/or current system message tag information of the UE from the UE. Specifically, the eNB receives an RRC connection request message from the UE, where the message includes the interference indication message and/or the current system message tag information of the UE.

Step 406: The eNB sends an RRC connection setup message to the UE, to enable the UE to initiate an RRC connection setup process.

In this step, after receiving the RRC connection request message from the UE, the eNB sends the RRC connection setup message to the UE, so as to initiate the RRC connection setup process of the UE. Specifically, the RRC connection setup message may be expressed as an RRC _Connection_Setup message. After receiving the RRC connection setup message, the UE initiates the RRC connection setup process, and normally sets up an RRC connection.

Step 407: The eNB receives an RRC setup complete message from the UE.

In this step, after normally setting up the RRC connection, the UE sends an RRC connection complete message to the eNB. Specifically, the RRC connection complete message may be expressed as an RRC _Connection_Complete message.

In step 407, if the eNB merely receives the interference indication message from the UE, perform step 409 directly after step 407. In step 407, if the eNB receives the current system message tag information of the UE from the UE, after step 407, perform step 409 directly; or perform step 408 first, and perform step 409 after step 408.

Step 408: The eNB identifies, according to the current system message tag information of the UE, a system message element that needs to be updated by the UE.

This step is the same as step 204 recorded in the second embodiment of the present invention, and details are not repeatedly described here.

Step 409: The eNB sends a system message update indication message to the UE through dedicated signaling in the available subframe.

This step is the same as step 205 recorded in the second embodiment of the present invention and step 307 recorded in the third embodiment of the present invention, and details are not repeatedly described here.

The method for updating a system message according to the fourth embodiment of the present invention is applicable to a UE in an idle state. In the fourth embodiment of the present invention, the UE sends the interference indication message and/or the current system message tag information of the UE to the eNB through the RRC connection request message; after receiving the RRC connection request message from the UE, the eNB sends the RRC connection setup message to the UE to initiate the RRC connection setup process of the UE, and the eNB sends the system message update indication message to the UE in the available subframe, so as to complete a system message update process and an access process of the UE which has not access the eNB when the system message is updated, thereby improving accuracy of system message update.

Furthermore, on the basis of the technical solutions recoded in the first embodiment to the fourth embodiment, an information element (Information Element, referred to as IE for short) may also be added in the paging message in the foregoing embodiments. Specifically, the added IE is used to indicate available subframe information, where the available subframe is a low-interference subframe when the eNB communicates with the UE, where the low-interference subframe is obtained through the negotiation between the eNB and the neighboring eNB. In an implementation manner, the available subframe is an ABS subframe. The available subframe is indicated to the UE, so that the UE can accurately acquire the low-interference available subframe, and receive the system message update indication message from the eNB in the available subframe, thereby further ensuring that the UE can correctly obtain an information element of system message update, and improving the accuracy of system message update.

Through the second embodiment of the present invention to the fourth embodiment of the present invention, the implementation manner for the eNB to send the system message update indication message through a dedicated message is described. When sending the system message update indication message to the UE, the eNB may also send the system message update indication message in a manner of a broadcast message. An implementation manner for the eNB to send the system message update indication message to the UE through the broadcast message is described in the following through a fifth embodiment of the present invention.

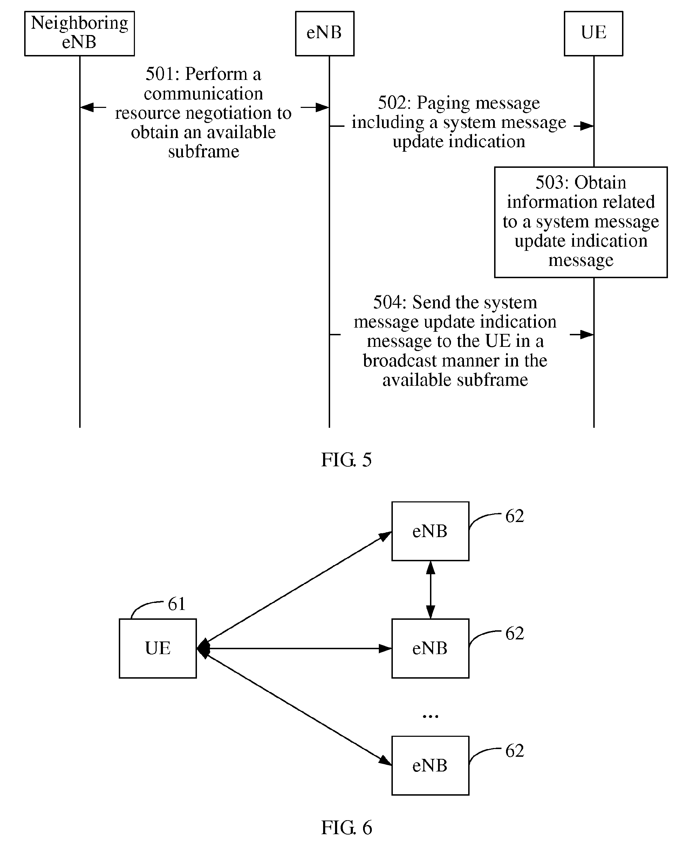

FIG. 5 is a flowchart of a method for updating a system message according to a fifth embodiment of the present invention. As shown in FIG. 5, the method includes the following procedure.

Step 501: An eNB performs a communication resource negotiation with a neighboring eNB to obtain an available subframe. In this step, the available subframe is a low-interference subframe when the eNB communicates with a UE. This step is the same as step 201 in the second embodiment of the present invention, and details are not repeatedly described here.

Step 502: The eNB sends a paging message including a system message update indication to the UE.

In this step, the eNB sends the paging message to the UE, where the paging message includes at least a system message update indication, which is used to instruct the UE to prepare to receive a system message update indication message.

Step 503: The UE obtains information related to the system message update indication message.

In this step, the information related to the system message update indication message may specifically include one or a combination of the following information: indication information of sending the system message update indication message by the eNB in a broadcast manner, subframe information used by the eNB when sending the system message update indication message, information about the number of times of sending the system message update indication message by the eNB, and information about a time length of sending the system message update indication message by the eNB. The time length indicates the number of frames starting from sending the paging message to ending broadcast of the system message update indication message; within a specified time length, the system message update indication message is sent repeatedly. Specifically, the UE may obtain the information related to the system message update indication message in three manners. In a first manner, in step 502, a new information element (Information Element, referred to as IE for short) needs to be added to the paging message, where the newly-added IE is used to indicate the information related to the system message update indication message; in step 503, the UE obtains, according to the received paging message, the foregoing information related to the system message update indication message. In a second manner, a new IE needs to be added to a system message, where the newly-added IE is used to indicate the information related to the system message update indication message. After updating the system message each time, the UE stores the system message; after receiving the paging message in step 502, the UE acquires that the system message update indication message needs to be received currently; so in step 503, the UE obtains, according to the currently stored system message, the information related to the system message update indication message. In a third manner, the information related to the system message update indication message is set in a communication protocol; in step 503, the UE obtains, according to the communication protocol, the information related to the system message update indication message. Step 504: The eNB sends the system message update indication message to the UE in a broadcast manner in the available subframe.

In this step, the system message update indication message is sent in a broadcast manner, and the number of broadcast of the system message update indication message is finite. Specifically, the system message update indication message is scheduled by using a designated radio network temporary identity (Radio Network Temporary Identity, referred to as RNTI for short) and a packet dedicated control channel (Packet Dedicated Control Channel, PDCCH). A specific value of the RNTI may be pre-specified through a protocol. The system message update indication message may include all system message elements after update, and may also merely include an updated system message element; may also merely include all system message elements of a designated information block of the system message, for example, the designated information block may be one or a combination of a MIB, a SIB1, and a SIB2; or, the system message update indication message may also merely include an updated system message element of the designated information block.

In the fifth embodiment of the present invention, the eNB sends the system message update indication message to the UE in a broadcast manner, so that it can be ensured that each UE can correctly receive the system message update indication message when there are multiple UEs. In addition, the information related to the system message update indication message is indicated to the UE through the paging message, the system message before update, or the communication protocol. Therefore, the UE can preacquire the subframe and the time length for receiving the system message update indication message, thereby further ensuring that the UE can correctly receive the system message update indication message, and further improving accuracy of system message update.

FIG. 6 is a schematic structural diagram of a communication system according to a sixth embodiment of the present invention. As shown in FIG. 6, the system includes at least a UE 61 and more than one eNB 62.

Each eNB 62 is configured to perform a communication resource negotiation with a neighboring eNB 62 to obtain an available subframe, send a paging message including a system message update indication to the UE 61, and send a system message update indication message to the UE 61 in the available subframe.

The UE 61 is configured to receive the paging message including the system message update indication, and receive the system message update indication message in the available subframe.

On the basis of the foregoing technical solutions, content of the system message update indication message sent by the eNB 62 may adopt any one of the following four manners. Specifically, in a first manner, the eNB 62 sends system message update indication message including all system message elements after update to the UE 61 in the available subframe. In a second manner, the eNB 62 sends system message update indication message including an updated system message element to the UE 61 in the available subframe. In a third manner, the eNB 62 sends system message update indication message including all system message elements of a designated information block of the system message to the UE 61 in the available subframe. In a fourth manner, the eNB 62 sends system message update indication message including an updated system message element of a designated information block of the system message to the UE 61 in the available subframe.

On the basis of the foregoing technical solutions, specifically, the eNB 62 may send the system message update indication message to the UE 61 through dedicated signaling in the available subframe. In this case, the UE 61 further sends an interference indication message and/or current system message tag information of the UE 61 to the eNB 62, and the eNB 62 receives the interference indication message and/or the current system message tag information of the UE 61 from the UE 61. Furthermore, if the UE 61 sends the current system message tag information of the UE 61 to the eNB 62, the eNB 62 further identifies, according to the current system message tag information of the UE 61, a system message element that needs to be updated by the UE 61. Moreover, the UE 61 may carry the interference indication message and/or the current system message tag information of the UE 61 in an RRC connection request message or a MAC CE, and send the interference indication message and/or the current system message tag information of the UE 61 to the eNB 62 through the RRC connection request message or the MAC CE.

On the basis of the foregoing technical solutions, specifically, the eNB 62 may also send the system message update indication message to the UE 61 in a broadcast manner in the available subframe. In this case, the UE 61 further obtains information related to the system message update indication message. The information related to the system message update indication message includes one or a combination of: indication information of sending the system message update indication message by the eNB 62 in a broadcast manner, subframe information used by the eNB 62 when sending the system message update indication message, information about the number of times of sending the system message update indication message by the eNB 62, and information about a time length of sending the system message update indication message by the eNB 62. Specifically, the UE 61 may obtain the information related to the system message update indication message in three manners. In a first manner, the eNB 62 further sends the paging message including the system message update indication to the UE 61, and the UE 61 obtains, according to the paging message including the system message update indication, the information related to the system message update indication message. In a second manner, the UE 61 obtains, according to a stored system message, the information related to the system message update indication message. In a third manner, the UE 61 obtains, according to a communication protocol, the information related to the system message update indication message.

On the basis of the foregoing technical solutions, the eNB 62 may be further configured to implement a random access process of the UE 61, which specifically includes: receiving a random access preamble from the UE 61, sending a random access response message to the UE 61, and sending an RRC connection setup message to the UE 61, and the like.

In the sixth embodiment of the present invention, the eNB negotiates with the neighboring eNB to obtain the available subframe, and sends the system update indication message to the UE in the available subframe; because the available subframe is a low-interference subframe, adverse effects caused by interference may be reduced by transmitting the message in the available subframe, so that the UE can correctly obtain an updated system message, thereby improving accuracy of system message update.

In addition, the UE sends the interference indication message to the eNB through the RRC connection request message or the MAC CE, and the eNB acquires, through the interference indication message, that the UE is currently affected by interference and cannot correctly receive the system message, so the eNB sends the system message update indication message to the UE in the low-interference available subframe obtained through the negotiation. Therefore, when the UE is affected by interference, the eNB can acquire, through the interference indication message, that the UE is affected by interference, and then initiate the step of sending the system message update indication message to the UE in the available subframe, thereby further ensuring that the UE can also correctly obtain an updated system message when the UE is affected by interference. Furthermore, the UE sends the current system message tag information of the UE to the eNB through the RRC connection request message or the MAC CE, and the eNB identifies, according to the current system message tag information of the UE, a system message element that needs to be updated by the UE. Because the system message update indication message may merely include an updated system message element and may not include an unchanged system message element, capacity of the system message update indication message is reduced, thereby further ensuring that the message can be successfully transmitted to the UE, and further improving the accuracy of system message update.

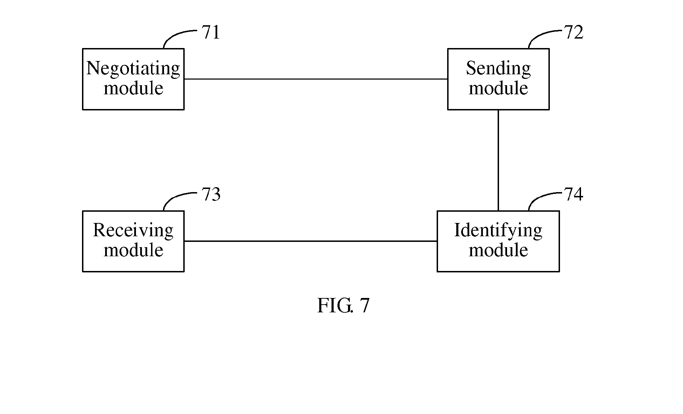

FIG. 7 is a schematic structural diagram of an eNB according to a seventh embodiment of the present invention. As shown in FIG. 7, the eNB includes at least a negotiating module 71 and a sending module 72.

The negotiating module 71 is configured to perform a communication resource negotiation with a neighboring eNB to obtain an available subframe.

The sending module 72 is configured to send a paging message including a system message update indication to a UE, and send a system message update indication message to the UE in the available subframe.

On the basis of the foregoing technical solutions, content of the system message update indication message sent by the sending module 72 may adopt any one of the following four manners. Specifically, in a first manner, the sending module 72 sends system message update indication message including all system message elements after update to the UE in the available subframe. In a second manner, the sending module 72 sends system message update indication message including an updated system message element to the UE in the available subframe. In a third manner, the sending module 72 sends system message update indication message including all system message elements of a designated information block of the system message to the UE in the available subframe. In a fourth manner, the sending module 72 sends system message update indication message including an updated system message element of a designated information block of the system message to the UE in the available subframe.

On the basis of the foregoing technical solutions, specifically, the sending module 72 may send the system message update indication message to the UE through dedicated signaling in the available subframe. In this case, the eNB may further include a receiving module 73. The receiving module 73 receives an interference indication message and/or current system message tag information of the UE from the UE. When the receiving module 73 receives the interference indication message from the UE, the sending module 72 sends the system message update indication message to the UE in a low-interference available subframe. Furthermore, when the receiving module 73 receives the current system message tag information of the UE from the UE, the eNB may further include an identifying module 74. The identifying module 74 identifies, according to the current system message tag information of the UE, a system message element that needs to be updated by the UE. On the basis of the foregoing technical solutions, specifically, the sending module 72 may further send the system message update indication message to the UE in a broadcast manner in the available subframe. In this case, the paging message sent by the sending module 72 to the UE includes the system message update indication, and may further include information related to the system message update indication message, where the information related to the system message update indication message includes one or a combination of: indication information of sending the system message update indication message by the eNB in a broadcast manner, subframe information used by the eNB when sending the system message update indication message, information about the number of times of sending the system message update indication message by the eNB, and information about a time length of sending the system message update indication message by the eNB.

In the seventh embodiment of the present invention, the eNB obtains the low-interference available subframe through the negotiation of the negotiating module, the sending module sends the system update indication message to the UE in the available subframe, thereby reducing adverse effects caused by interference, and improving accuracy of system message update.

Moreover, by receiving, through the receiving module, the interference indication message and/or the current system message tag information of the UE from the UE, the eNB acquires, according to the interference indication message, that the UE is currently affected by interference and cannot correctly receive the system message, and controls the sending module to send the system message update indication message to the UE in the low-interference available subframe, thereby further ensuring that the UE can also correctly obtain an updated system message when the UE is affected by interference, and further improving the accuracy of system message update. By receiving, through the receiving module, the current system message tag information of the UE from the UE, the identifying module identifies, according to the current system message tag information of the UE, the system message element that needs to be updated by the UE. Because the system message update indication message may merely include an updated system message element and may not include an unchanged system message element, capacity of the system message update indication message is reduced, thereby further ensuring that the message can be successfully transmitted to the UE, and further improving the accuracy of system message update.

It should be noted that, for brevity, the foregoing method embodiments are described as a series of action combinations. However, persons skilled in the art should understand that the present invention is not limited to the order of the described actions, because according to the present invention, some steps may adopt other order or occur simultaneously. It should be further understood by persons skilled in the art that the embodiments described in the specification all belong to exemplary embodiments, and the involved actions and modules are not necessarily required by the present invention.

In the foregoing embodiments, description of each of the embodiments has their respective focuses. For a part that is not described in detail in a certain embodiment, reference may be made to related description in other embodiments.

Persons of ordinary skill in the art should understand that, all or part of the steps of the foregoing method embodiments may be implemented by a program instructing relevant hardware. The foregoing program may be stored in a computer readable storage medium. When the program is run, the steps included in the foregoing method embodiments are performed. The foregoing storage medium may include any medium capable of storing program codes, such as a ROM, a RAM, a magnetic disk, or an optical disk.

Finally, it should be noted that the foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions recorded in the foregoing embodiments or make equivalent replacements to part of the technical features of the technical solutions recorded in the foregoing embodiments; however, these modifications or replacements do not make the essence of the corresponding technical solutions depart from the spirit and scope of the technical solutions of the embodiments of the present invention.

## Claims

1. A method for updating a system message, comprising:
performing, by a base station eNB, a communication resource negotiation with a neighboring eNB to obtain an available subframe;
sending, by the eNB, a paging message comprising a system message update indication to a user equipment UE; and
sending, by the eNB, a system message update indication message to the UE in the available subframe.

2. The method according to claim 1, wherein the system message update indication message comprises:
all system message elements;
or, an updated system message element;
or, all system message elements of a designated information block of a system message;
or, an updated system message element of a designated information block of a system message.

3. The method according to claim 2, wherein the designated information block of the system message comprises:
one or a combination of a master information block MIB, a system information block 1 SIB 1, and a system information block 2 SIB2.

4. The method according to any one of claims 1 to 3, wherein the sending, by the eNB, a system message update indication message to the UE in the available subframe comprises:
sending, by the eNB, the system message update indication message to the UE through dedicated signaling in the available subframe.

5. The method according to claim 4, wherein after the sending, by the eNB, a paging message comprising a system message update indication to a user equipment UE and before the sending, by the eNB, a system message update indication message to the UE in the available subframe, the method further comprises:
receiving, by the eNB, an interference indication message and/or current system message tag information of the UE from the UE.

6. The method according to claim 5, wherein the receiving, by the eNB, an interference indication message and/or current system message tag information of the UE from the UE comprises:
receiving, by the eNB, a radio resource control RRC connection request message from the UE, wherein the RRC connection request message comprises the interference indication message and/or the current system message tag information of the UE;
or,
receiving, by the eNB, a medium access control MAC control element CE from the UE, wherein the MAC CE comprises the interference indication message and/or the current system message tag information of the UE.

7. The method according to claim 5, wherein after the receiving, by the eNB, the current system message tag information of the UE, the method further comprises:
identifying, by the eNB and according to the current system message tag information of the UE, a system message element that needs to be updated by the UE.

8. The method according to claim 5, wherein after the sending, by the eNB, a paging message comprising a system message update indication to a user equipment UE, the method further comprises:
receiving, by the eNB, a random access preamble from the UE; and
sending, by the eNB, a random access response message to the UE.

9. The method according to claim 5, wherein
the receiving, by the eNB, the interference indication message and/or the current system message tag information of the UE from the UE comprises:
receiving, by the eNB, an RRC connection request message from the UE, wherein the RRC connection request message comprises the interference indication message and/or the current system message tag information of the UE; and
after the receiving, by the eNB, an RRC connection request message from the UE, the method further comprises: sending, by the eNB, an RRC connection setup message to the UE; and receiving, by the eNB, an RRC connection setup complete message from the UE.

10. The method according to any one of claims 1 to 3, wherein the sending, by the eNB, a system message update indication message to the UE in the available subframe comprises:
sending, by the eNB, the system message update indication message to the UE in a broadcast manner in the available subframe.

11. The method according to claim 10, wherein after the sending, by the eNB, a paging message comprising a system message update indication to a user equipment UE, the method further comprises:
obtaining, by the UE, information related to the system message update indication message; wherein
the information related to the system message update indication message comprises one or a combination of: indication information of sending the system message update indication message by the eNB in a broadcast manner, subframe information used by the eNB when sending the system message update indication message, information about the number of times of sending the system message update indication message by the eNB, and information about a time length of sending the system message update indication message by the eNB.

12. The method according to claim 11, wherein the obtaining, by the UE, information related to the system message update indication message comprises:
obtaining, by the UE, the information related to the system message update indication message from the paging message comprising the system message update indication;
or, obtaining, by the UE and according to a stored system message, the information related to the system message update indication message;
or, obtaining, by the UE and according to a communication protocol, the information related to the system message update indication message.

13. A communication system, comprising:
more than one base station eNB, wherein each eNB is configured to perform a communication resource negotiation with a neighboring eNB to obtain an available subframe, send a paging message comprising a system message update indication to a user equipment UE, and send a system message update indication message to the UE in the available subframe; and
the UE, configured to receive the paging message comprising the system message update indication, and receive the system message update indication message in the available subframe.

14. The communication system according to claim 13, wherein
the eNB is specifically configured to send the system message update indication message comprising all system message elements to the UE in the available subframe;
or, the eNB is specifically configured to send the system message update indication message comprising an updated system message element to the UE in the available subframe;
or, the eNB is specifically configured to send the system message update indication message comprising all system message elements of a designated information block of a system message to the UE in the available subframe;
or, the eNB is specifically configured to send the system message update indication message comprising an updated system message element of a designated information block of a system message to the UE in the available subframe.

15. The communication system according to claim 13 or 14, wherein
the eNB is specifically configured to send the system message update indication message to the UE through dedicated signaling in the available subframe.

16. The communication system according to claim 15, wherein
the UE is further configured to send an interference indication message and/or current system message tag information of the UE to the eNB; and
the eNB is further configured to receive the interference indication message and/or the current system message tag information of the UE from the UE.

17. The communication system according to claim 15, wherein
the UE is further configured to send the current system message tag information of the UE to the eNB; and
the eNB is further configured to receive the current system message tag information of the UE from the UE, and identify a system message element that needs to be updated by the UE.

18. The communication system according to claim 13 or 14, wherein
the eNB is specifically configured to send the system message update indication message to the UE in a broadcast manner in the available subframe.

19. The communication system according to claim 18, wherein
the UE is further configured to obtain information related to the system message update indication message, wherein the information related to the system message update indication message comprises one or a combination of: indication information of sending the system message update indication message by the eNB in a broadcast manner, subframe information used by the eNB when sending the system message update indication message, information about the number of times of sending the system message update indication message by the eNB, and information about a time length of sending the system message update indication message by the eNB.

20. The communication system according to claim 19, wherein
the eNB is further configured to send the paging message comprising the system message update indication to the UE;
the UE is specifically configured to obtain the information related to the system message update indication message from the paging message comprising the system message update indication;
or, the UE is specifically configured to obtain, according to a stored system message, the information related to the system message update indication message;
or, the UE is specifically configured to obtain, according to a communication protocol, the information related to the system message update indication message.

21. A base station eNB, comprising:
a negotiating module, configured to perform a communication resource negotiation with a neighboring eNB to obtain an available subframe; and
a sending module, configured to send a paging message comprising a system message update indication to a user equipment UE, and send a system message update indication message to the UE in the available subframe.

22. The eNB according to claim 21, wherein
the sending module is specifically configured to send the system message update indication message comprising all system message elements to the UE in the available subframe;
or, the sending module is specifically configured to send the system message update indication message comprising an updated system message element to the UE in the available subframe;
or, the sending module is specifically configured to send the system message update indication message comprising all system message elements of a designated information block of a system message to the UE in the available subframe;
or, the sending module is specifically configured to send the system message update indication message comprising an updated system message element of a designated information block of a system message to the UE in the available subframe.

23. The eNB according to claim 21 or 22, wherein
the sending module is specifically configured to send the system message update indication message to the UE through dedicated signaling in the available subframe.

24. The eNB according to claim 23, further comprising:
a receiving module, configured to receive an interference indication message and/or current system message tag information of the UE from the UE.

25. The eNB according to claim 23, further comprising:
a receiving module, configured to receive current system message tag information of the UE from the UE; and
an identifying module, configured to identify, according to the current system message tag information of the UE, a system message element that needs to be updated by the UE.

26. The eNB according to claim 21 or 22, wherein
the sending module is specifically configured to send the system message update indication message to the UE in a broadcast manner in the available subframe.
